Europäisches Patentamt

European Patent Office

Office européen des brevets

(11) Publication number: **0 137 779**
**B1**

# (12) EUROPEAN PATENT SPECIFICATION

(45) Date of publication of patent specification: **24.05.89**

(21) Application number: **83901680.5**

(22) Date of filing: **14.04.83**

(86) International application number:
**PCT/US83/00560**

(87) International publication number:
**WO 84/03342 30.08.84 Gazette 84/21**

(51) Int. Cl.⁴: **F 16 K 3/32,** F 16 K 11/07,
F 16 K 47/04

(54) METERING SLOT CONFIGURATION FOR HYRAULIC CONTROL VALVES.

(30) Priority: **25.02.83 US 469848**

(43) Date of publication of application:
**24.04.85 Bulletin 85/17**

(45) Publication of the grant of the patent:
**24.05.89 Bulletin 89/21**

(84) Designated Contracting States:
**BE DE FR GB**

(56) References cited:
**WO-A-80/00870**
**FR-A-2 300 275**
**US-A-2 706 489**
**US-A-2 971 536**
**US-A-3 004 555**
**US-A-3 198 212**
**US-A-3 468 341**
**US-A-3 556 155**
**US-A-4 066 239**
**US-A-4 388 949**

(73) Proprietor: **CATERPILLAR INC.**
**100 Northeast Adams Street**
**Peoria Illinois 61629-6490 (US)**

(72) Inventor: **MELOCIK, Kurt Bernard**
**R.R.**
**Mazon, IL 60444 (US)**
Inventor: **McWILLIAMS, Orcenith Dean**
**110 East Southmoor Road**
**Morris, IL 60450 (US)**

(74) Representative: **Wagner, Karl H.**
**WAGNER & GEYER Patentanwälte**
**Gewuerzmuehlstrasse 5 Postfach 246**
**D-8000 München 22 (DE)**

Courier Press, Leamington Spa, England.

## Description

### Technical field

This invention relates generally to a metering slot configuration in a hydraulic control valve and more particularly to a meter slot configuration having a concave portion defined solely by curved surfaces.

### Background art

One of the goals in designing spool-type valves has been to hydraulically balance the forces acting on the valve spool so as to minimize operator effort and/or to facilitate control thereof. Since most of the valve spools are provided with metering slots for more precise control of the fluid flow therethrough, much of the force balancing is achieved by specific metering slot configurations. Such metering slot configurations can vary drastically depending upon the direction of fluid flow across the spool. For example, in a "meter out" condition wherein the metering is accomplished by fluid flow through the metering slots in a direction generally outward with respect to the valve spool, one effective type of metering slot configuration is that shown in U.S. Patent 2,971,536 issued to J. A. Junck et al on February 14, 1961. In a "meter in" condition wherein the metering is accomplished by throttling fluid flow through the metering slots in a direction generally inwardly with respect to the valve spool, the metering slot configuration disclosed in U.S. Patent 3,198,212 issued to J. A. Junck et al on August 3, 1965 has proven to be very effective at reducing flow forces. Of course, there are many variations of these two basic metering slot configurations as well as other types of metering slots utilized for specific applications.

The present invention relates particularly to a meter in condition from a high pressure zone to a low pressure zone. While the key way type metering slot shown in the above-noted U.S. Patent 3,198,212 is widely used for reducing flow forces under meter in conditions, one of the problems encountered therewith is that the flow rate relative to valve spool displacement is not always acceptable. In contrast thereto, the flat bottom end mill type metering slot may provide acceptable flow rate relative to valve spool displacement but the flow forces for that type of metering slot in a meter in condition are unacceptably high.

US—A—3,004,555 discloses several embodiments of fluid control cavities formed in a spool in place of the usual lands and reduced portions therebetween. Some of the cavities have a surface of revolution formed by rotating a cutter about an axis above the cylindrical surface of the spool. Such cavities provide the main flow path between the ports in the valve body.

The present invention is directed to overcoming one or more of the problems as set forth above.

### Disclosure of the invention

In one aspect of the present invention a control valve has a body which defines a bore and an inlet port and an outlet port in communication with the bore. A valve spool is slidably disposed in the bore and has an annular groove and an adjacent land for selectively controlling communication from the inlet port to the outlet port in response to movement of the valve spool in the bore. The annular groove is defined in part by a reduced diameter annular surface. The valve spool has a metering slot in the land and the annular surface. The metering slot is a concave portion defined solely by a surface of revolution generated by rotating a ball-end end mill cutter about an axis disposed perpendicular to the axis of the spool with the surface being a spherical surface.

### Brief description of the drawings

Figure 1 is a schematic representation of a circuit having a cross-sectional view of a control valve therein illustrating an embodiment of the present invention;

Figure 2 is an enlarged fragmentary view of the valve spool to more clearly illustrate the present invention; and

Figure 3 is a cross-sectional view taken along line III—III of Figure 2.

### Best mode for carrying out the invention

Referring now to the drawings, a control valve 10 is connected to a pump 11 through a conduit, to a tank 13 through a conduit 14 and to a hydraulic motor 16 through a pair of conduits 17 and 18. The control valve 10 includes a valve body 19, a load check valve 21 and a valve spool 22.

The valve body 19 has a bore 23 extending therethrough and a plurality of axially spaced annuluses 24, 25, 26, 27, 28, 29, 30, 31 and 32 in communication with the bore. An inlet port 33 connects the conduit 12 with the annulus 28. A manifold 34 is connected to the annuluses 24, 27, 29 and 32 and to an outlet port 36 which is connected to the conduit 14. A first motor port 37 connects the annulus 25 with the conduit 17 and a second motor port 38 connects the annulus 31 with the conduit 18. A branched passage 39 connects the annulus 28 with the annuluses 26 and 30. The load check valve 21 is resiliently biased to a closed position normally blocking communication between the annulus 28 and the branched passage 39.

The valve spool 22 is slidably disposed in the bore 23 and has a plurality of axially spaced annular grooves 41, 42, 43 and 44 formed therein and positioned between respective pairs of a plurality of lands 46, 47, 48, 49 and 50. A plurality of conventional metering slots, one shown at 51, are provided in the lands 46 and 47 and traverse the annular groove 41. Similarly, a plurality of conventional metering slots 52 are provided in the lands 49 and 50 and traverse the annular groove 44. The annular grooves 42 and 43 are defined in part by reduced diameter annular surfaces 53 and 54 respectively. Each of the annular surfaces 53, 54 have a diameter less than the diameter of the land 48.

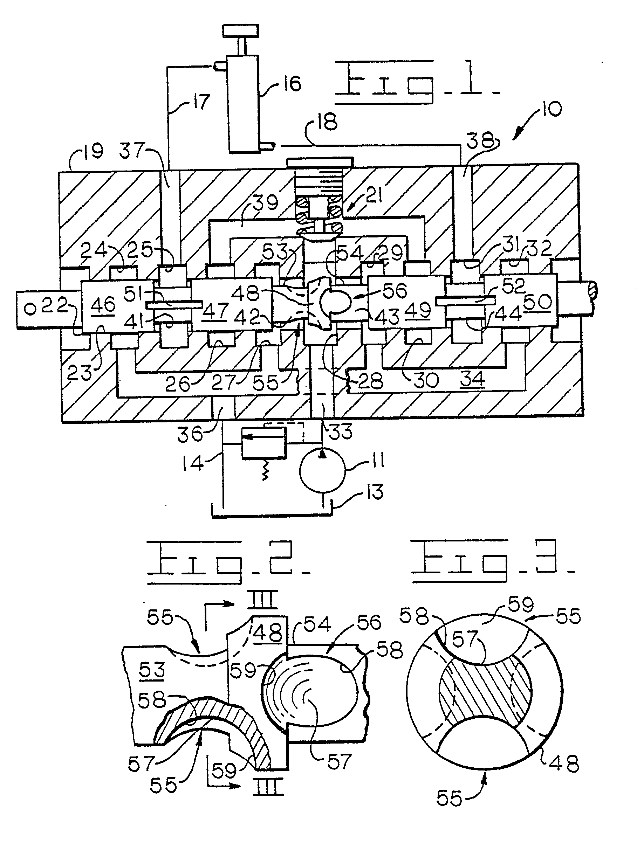

A pair of metering slots 55 of the present invention are provided in the land 48 and the annular surface 53 of the annular groove 42 while another pair of metering slots 56 of the present invention are provided in the land 48 and the annular surface 54 of the annular groove 43. The metering slots 55 and 56 are identical and thus the metering slots 55 will be described in detail with the same reference numerals applied to both of the metering slots 55 and 56. As more clearly shown in Figures 2 and 3, each of the metering slots 55 interconnects the annular groove 42 and the adjacent land 48. Each metering slot 55 includes a concave portion 57 defined solely by curved surfaces indicated by the reference numeral 58. The curved surfaces 58 of the present invention are contiguous surfaces of a surface of revolution and more particularly are contiguous surfaces of a spherical surface. Each of the metering slots 55 also includes an arcuate notch 59 disposed primarily in the land 48 and being contiguous with the concave portion 57.

The metering slots 55 and 56 of the present embodiment are machined in the valve spool 22 by moving a rotating ball-end end mill cutter substantially perpendicularly toward the longitudinal center line of the valve spool 22.

Industrial applicability

In operation, the annular grooves 42 and 43 and the adjacent intermediate land 48 are positioned for selectively controlling fluid flow from the inlet port 33 to the outlet port 36 through the metering slots 55 or 56 so that the valve spool 22 ultimately controls fluid flow from the inlet port 33 to one of the motor ports 37 or 38. In the neutral position, fluid from the pump 11 is directed into the inlet port 33 and annulus 28 and is free to pass through the annular grooves 42 and 43 and annuluses 27 and 29 into the manifold 34 and outward through the outlet port 36 without having affected the position of the hydraulic motor 16.

When it is desired to extend the hydraulic jack by admission of fluid under pressure to its head end, the valve spool 22 is moved toward the left. The initial movement of the valve spool 22 establishes communication between the annuluses 30 and 31 and between the annuluses 24 and 25 while the land 49 closes communication between annulus 28 and 29 and land 48 closes communication between the annuluses 28 and 27 except through the metering slots 55 which begin to restrict fluid flow from the inlet port 33 to the outlet port 36. The metering slots are capable of being gradually closed by further movement of the valve spool 22 toward the left for metering purposes. The restriction of fluid flow between the inlet port 33 and outlet port 36 causes a build up of pressure in the inlet port and annulus 28 which affects opening of the load check valve 21 thereby admitting fluid into the branched passageway 39 and subsequently through the annulus 30, metering slot 52, annular groove 44, annulus 31, motor port 38, conduit 18 and into the head end of the hydraulic motor 16. It can be seen that the volume of fluid being directed to the hydraulic motor is controlled by the restriction of fluid flow through the arcuate notch 59 of the metering slots 55 from the inlet port 33 to the outlet port 36. Furthermore, the fluid pressure in the inlet port 33 will be substantially the same as the fluid pressure in the hydraulic motor so that the inlet port 33 and annulus 28 becomes a zone of high pressure while the annulus 27 and outlet port 36 is a zone of low pressure. The metering slots 55, 56 thus "meter in" fluid from the high pressure zone to the low pressure zone.

When it is desired to retract the hydraulic motor 16, the valve spool 22 is moved to the right resulting in fluid being directed through the conduit 17 with the flow rate being controlled by the metering of fluid through the metering slots 56 similarly to that described above.

In accordance with the present invention, the configuration of the metering slots 55, 56 is such as to impose a minimum of flow forces on the valve spool 22 so that a minimum of operator effort is required to actuate the spool in either direction while providing the desired flow rate relative to valve spool displacement. More specifically, the concave portions 57 are effective to control or minimize the flow forces acting on the valve spool. While the exact manner in which the flow forces are minimized is not fully understood, it is theorized that the curved surfaces 58 of the metering slots tend to direct the fluid flow generally through a central focal zone. The curved surfaces then cause the fluid flow to spread out and direct the fluid away from impingement against any immediately adjacent surface of either the body or the valve spool. When compared with a metering slot formed by a flat bottom end mill cutter, the metering slot of the present invention reduces the flow forces by approximately 65% when the pressure drop across the metering slot is 2,400 kPa and by about 85% when the pressure drop across the metering slot is about 20,700 kPa.

In further accordance with the present invention, the arcuate notches 59 of the metering slots 55, 56 provide the desired flow rate control from the inlet port 33 to the outlet port 36. For example, the ratio of flow rate per increment of valve spool travel varies throughout the metering range of valve spool movement with the degree of variation being determined by the curvature and/or size of the arcuate notch. In contrast thereto, with the conventional key way type metering slot, the ratio of flow rate per increment of valve spool travel is constant.

**Claims**

1. A control valve (10) having a body (19) defining a bore (23) and an inlet port (33) and an outlet port (36) in communication with the bore (23), and a valve spool (22) slidably disposed in said bore (23) and having an annular groove (42, 43) and an adjacent land (48) for selectively controlling communication from the inlet port (33) to the outlet port (36) in response to movement of the valve spool (21) in the bore (23), said annular groove (42, 43) being defined in part by a reduced diameter annular surface (52, 53), said valve spool (22) having a metering slot (55, 56) in said land (48) and said annular surface (42, 43) characterized in that said metering slot (55, 56) is a concave portion (57) defined solely by a surface of revolution generated by rotating a ball-end end mill cutter about an axis disposed perpendicular to the axis of the spool, said surface of revolution being a spherical surface.

2. The control valve (10), as set forth in claim 1 wherein said metering slot (55, 56) is adapted for use in a meter in condition of operation.

**Patentansprüche**

1. Steuerventil (10) mit einem Körper (19), der eine Bohrung (23) und eine Einlaßöffnung (33) sowie eine Auslaßöffnung (36) in Verbindung mit der Bohrung (23) definiert und mit einem Ventilkolben (22), der gleitend in der Bohrung (23) angeordnet ist und eine Ringnut (42, 43) besitzt und einen benachbarten Steg (48) zum selektiven Steuern der Verbindung von der Einlaßöffnung (33) zu der Auslaßöffnung (36) infolge der Bewegung des Ventilkolbens (21) in der Bohrung (23), wobei die Ringnut (42, 43) teilweise durch eine einen reduzierten Durchmesser aufweisende Ringoberfläche (52, 53) gebildet ist, und wobei ferner der Ventilkolben (22) einen Zumeßschlitz (55, 56) in dem Steg (48) und der Ringoberfläche (42, 43) aufweist, dadurch gekennzeichnet, daß der Zumeßschlitz (55, 56) ein konkaver Teil (57) ist, und zwar definiert allein durch eine Drehoberfläche erzeugt durch Drehung eines ein Kugelende aufweisenden Stirnfräsers um eine Achse senkrecht zur Achse des Kolbens, wobei die Drehoberfläche eine sphärische Oberfläche ist.

2. Steuerventil (10) nach Anspruch 1, wobei der Zumeßschlitz (55, 56) zur Verwendung in einem Zumeßzustand des Betriebs geeignet ist.

**Revendications**

1. Soupape de commande (10) comportant un corps (19) définissant un alésage (23) et un orifice d'entrée (33) et un orifice de sortie (36) en communication avec l'alésage (23), et un tiroir de soupape (22) monté coulissant dans ledit alésage (23) et possédant une gorge annulaire (42, 43) et une portée adjacente (48) pour commander sélectivement la communication de l'orifice d'entrée (33) à l'orifice de sortie (36) en réponse au déplacement du tiroir de soupape (21) dans l'alésage (23), ladite gorge annulaire (42, 43) étant définie en partie par une surface annulaire de diamètre réduit (52, 53), ledit tiroir de soupape (22) possédant une fente de dosage (55, 56) ménagée dans ladite portée (48) et dans ladite surface annulaire (42, 43), caractérisée en ce que ladite fente de dosage (55, 56) est une partie concave (57) définie uniquement par une surface de révolution générée par la rotation d'une fraise à queue à tête sphérique autour d'un axe disposé perpendiculairement à l'axe du tiroir, ladite surface de révolution étant une surface sphérique.

2. Soupape de commande (10) selon la revendication 1, dans laquelle ladite fente de dosage (55, 56) est adaptée pour être utilisée dans un état de fonctionnement de dosage d'entrée.

Fig.1.

Fig.2.

Fig.3.